# EUROPÄISCHE PATENTANMELDUNG

(11) **EP 1 375 252 A2**
(43) Veröffentlichungstag der Anmeldung: **02.01.2004**
(21) Anmeldenummer: 03013791.3
(22) Anmeldetag: 18.06.2003
(51) Int. Cl.: B60Q 1/44

(54) **Steuereinrichtung für ein Bremslicht**

(30) Priorität: 20.06.2002 DE 20209568 U
(71) Anmelder: Deschler, Gerhard, 90425 Nürnberg (DE)
(72) Erfinder: Deschler, Gerhard, 90425 Nürnberg (DE)
(74) Vertreter: Schuhmann, Albrecht

(57) **Zusammenfassung**

Steuereinrichtung für ein Bremslicht (2) bei Kraftfahrzeugen, wobei durch Betätigung eines Bremsschalters am Heck des Kraftfahrzeugs von einer Kraftfahrzeugelektronik (4) gesteuerte Bremslichter (2) aufleuchten, wobei Mittel vorhanden sind um den Stillstand des Kraftfahrzeugs zu erfassen und ein entsprechendes Signal an die Kraftfahrzeugelektronik (4) abzugeben, und
wobei die Kraftfahrzeugelektronik (4) in Reaktion auf das Signal die Bremslichter (2) abschaltet.

## Beschreibung

Die Erfindung betrifft eine Steuereinrichtung für ein Bremslicht bei Kraftfahrzeugen, wobei durch Betätigung eines Bremsschalters am Heck des Kraftfahrzeugs von einer Kraftfahrzeugelektronik gesteuerte Bremslichter aufleuchten.

Diese lange bekannte Technik, die nachfolgende Fahrer warnen soll, ist in ihrer konkreten Ausführung Gegenstand vieler Verbesserungsvorschläge geworden. So haben sich im Lauf der Jahre die Größe und die Anordnung der Bremslichter stark gewandelt. Die DE 199 22 329 A1 schlägt vor, die Bremslichter noch nachleuchten zu lassen, wenn der Fahrer den Fuß vom Bremspedal genommen hat. Variable, veränderbare Blinkfrequenzen in Abhängigkeit von bestimmten Situationen sind aus der DE 197 52 136 C1 bekannt.

Aufgabe der vorliegenden Erfindung ist es, den Stand der Technik durch eine Maßnahme zu bereichern, die den Fahrkomfort des hinter dem abgebremsten Fahrzeug beispielsweise an einer roten Ampel stehenden Fahrers eines nachfolgenden Fahrzeugs zu heben.

Diese Aufgabe wird mit den im kennzeichnenden Teil des Anspruchs 1 genannten Merkmalen gelöst. Fortbildungen und vorteilhafte Ausführungen der Erfindung sind in den weiteren Ansprüchen umfaßt.

Erfindungsgemäß ist eine Steuereinrichtung für ein Bremslicht bei Kraftfahrzeugen, wobei durch Betätigung eines Bremsschalters am Heck des Kraftfahrzeugs von einer Kraftfahrzeugelektronik gesteuerte Bremslichter aufleuchten, dadurch gekennzeichnet, dass Mittel vorhanden sind, den Stillstand des Kraftfahrzeugs zu erfassen und ein entsprechendes Signal an die Kraftfahrzeugelektronik abzugeben, wobei die Kraftfahrzeugelektronik in Reaktion auf das Signal die Bremslichter abschaltet. Dies bewirkt, dass die relativ grellen Bremslichter den Fahrer eines hinter dem abgebremsten Fahrzeug stehen Kraftfahrzeugs nicht unnötig blenden.

Vorzugsweise ist ein Timer oder eine andere Verzögerungsschaltung vorhanden, wobei diese so programmiert sind, dass die Kraftfahrzeugelektronik die Bremslichter nach einem bestimmten Zeitraum abschaltet. Beispielsweise beträgt dieser der Zeitraum zwischen 2 und 10 Sekunden.

Vorzugsweise veranlasst jede Betätigung des Bremsschalters die Kraftfahrzeugelektronik, die Bremslichter aufleuchten zu lassen. So kann der Fahrer, der den Fuß von der Bremse genommen hat, die Bremslichter nach Wunsch auch im Stand wieder aufleuchten lassen.

Wie üblich ist der Bremsschalter mit einem Bremspedal verbunden.

Im folgenden wird die Erfindung anhand einer Skizze beispielhaft verdeutlicht.

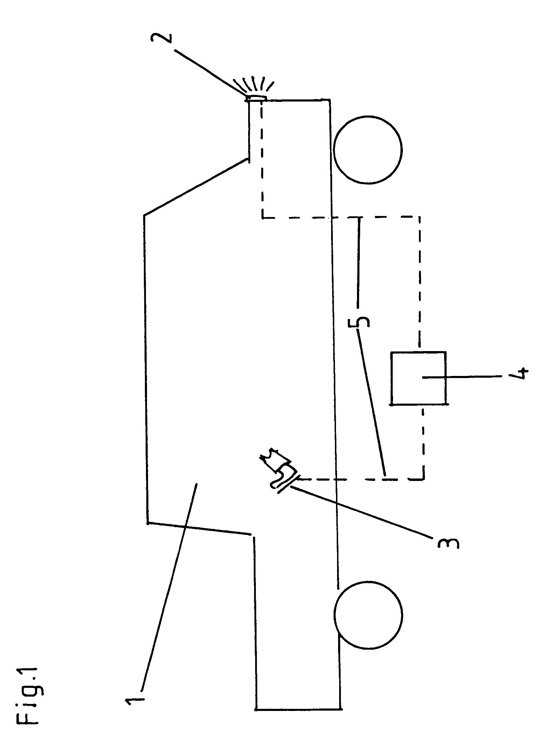

Fig. 1 zeigt schematisch ein Kraftfahrzeug 1 vom Typ einer Limousine in üblicher Ausstattung. Über ein Bremspedal 3 wird ein Bremsschalter betätigt und die Kraftfahrzeugelektronik 4 lässt die Bremslichter 2 aufleuchten. Hierzu sind in bekannter Weise Kabel 5 vorhanden. Erfindungsgemäß ist jedoch die Kraftfahrzeugelektronik 4 mit einer Zeitschaltung versehen, die die Bremslichter nach einigen Sekunden verlöschen lässt, auch wenn der Fuß des Fahrers auf dem Bremspedal 3 verbleibt und der Bremsschalter betätigt ist, jedoch nur, wenn ein Sensor oder dergleichen festgestellt hat, dass das Fahrzeug zum Stillstand gekommen ist..

## Patentansprüche

1. Steuereinrichtung für ein Bremslicht bei Kraftfahrzeugen, wobei durch Betätigung eines Bremsschalters am Heck des Kraftfahrzeugs von einer Kraftfahrzeugelektronik gesteuerte Bremslichter aufleuchten,
**dadurch gekennzeichnet,**
**dass** Mittel vorhanden sind, den Stillstand des Kraftfahrzeugs zu erfassen und ein entsprechendes Signal an die Kraftfahrzeugelektronik (4) abzugeben,
wobei die Kraftfahrzeugelektronik in Reaktion auf das Signal die Bremslichter (2) abschaltet.

2. Steuereinrichtung nach Anspruch 1,
**dadurch gekennzeichnet,**
**dass** ein Timer vorhanden ist, wobei der Timer so programmiert ist, dass die Kraftfahrzeugelektronik (4) die Bremslichter (2) nach einem bestimmten Zeitraum abschaltet.

3. Steuereinheit nach Anspruch 2,
**dadurch gekennzeichnet,**
**dass** der Zeitraum zwischen 2 und 10 Sekunden beträgt.

4. Steuereinheit nach einem der vorhergehenden Ansprüche,
**dadurch gekennzeichnet,**
**dass** jede Betätigung des Bremsschalters die Kraftfahrzeugelektronik veranlasst, die Bremslichter aufleuchten zu lassen.

5. Steuereinheit nach einem der vorhergehenden Ansprüche,
**dadurch gekennzeichnet,**
**dass** der Bremsschalter mit einem Bremspedal (3) verbunden ist.
